# FASCICULE DE BREVET EUROPEEN

(11) **EP 1 463 238 B1**
(45) Date de publication et mention de la délivrance du brevet: **28.09.2005**
(21) Numéro de dépôt: 04290706.3
(22) Date de dépôt: 15.03.2004
(51) Int. Cl.: H04L 12/24, H04L 12/26

(54) **Dispositif de gestion locale de procédés d'assurance pour un équipement de réseau de communications**
Vorrichtung zur lokalen Management von Sicherheitsverfahren für ein Gerät eines Telekommunikationsnetzes
Device for local management of security processes of a telecommunication network equipment

(30) Priorité: 28.03.2003 FR 0303835
(43) Date de publication de la demande: 29.09.2004
(73) Titulaire: ALCATEL, 75008 Paris (FR)
(72) Inventeur: Marilly, Emmanuel, 92160 Antony (FR); Betge-Brezetz, Stéphane, 75015 Paris (FR); Martinot, Olivier, 91210 Draveil (FR); Chevanne, Michel, 92140 Clamart (FR); Delegue, Gérard, 94230 Cachan (FR)
(74) Mandataire: Chaffraix, Sylvain

(56) Documents cités:
- FR-A- 2 774 191
- US-A- 6 085 243
- US-B1- 6 272 537
- HO L L ET AL: "REAL-TIME PERFORMANCE MONITORING AND ANOMALY DETECTION IN THE INTERNET: AN ADAPTIVE, OBJECTIVE-DRIVEN, MIX-AND-MATCH APPROACH" BELL LABS TECHNICAL JOURNAL, WILEY, CA, US, vol. 4, no. 4, octobre 1999 (1999-10), pages 23-40, XP000902469 ISSN: 1089-7089

## Description

L'invention concerne les réseaux de communications, et plus particulièrement ceux offrant une assurance de continuité de service(s).

De nombreux réseaux de communications mettent en oeuvre des procédés d'assurance qui contrôlent l'exécution d'activités de maintenance préventives et réactives destinées à assurer à leurs clients la continuité de la disponibilité de services, définis en termes de qualité de service (QoS). A cet effet, les réseaux disposent d'un système de gestion de réseau (ou NMS pour « Network Management System ») qui analyse continuellement l'état des ressources et les performances de manière à anticiper ou détecter des problèmes ou pannes et à déterminer les actions à entreprendre de sorte que les clients ne soient pas pénalisés.

Une telle analyse centralisée repose sur la collection d'un très grand nombre de données d'information et d'alarmes auprès des nombreux équipements de réseau, chargés d'effectuer des mesures de valeurs de paramètre(s) du réseau, et plus précisément auprès de leurs bases d'informations de gestion (ou MIB pour « Management Information Base ») chargées de stocker les données de gestion représentatives des valeurs mesurées. Une fois collectées, par exemple via un collecteur SNMP, les données sont stockées dans une base de données d'archivage, par exemple de type Oracle, et alimentent des modules de calcul qui mettent en oeuvre des formules ou équations prédéfinies.

Une telle solution est par exemple décrite dans l'article « *Real-Time Performance Monitoring and Anomaly Detection in the Internet: and Adaptative, Objective-Driven, Mix-and-Match Approach* » de L. Lawrence Ho, Christopher J. Macey and Ronald G. Hiller.

Un tel procédé d'assurance centralisé requiert l'emploi de bases de données de très grandes capacités, nécessite des temps de calcul importants et consomme de la bande passante (lors de la collecte), ce qui nuit aux performances du réseau.

Certaines tentatives ont été faites vers l'utilisation d'agents embarqués dans des éléments réseaux, mais les aspects décisionnels demeurent dans un organe centralisé et présentent les mêmes défauts que la solution précédente. De plus, ces tentatives ne concernent pas l'assurance.

Des exemples de telles tentatives peuvent être trouvées dans les brevets américains US 6 272 537 et US 6 085.

L'invention a donc pour but d'améliorer la situation.

Elle propose à cet effet un dispositif de gestion locale d'assurance pour un équipement de réseau de communications présentant une configuration choisie et comportant des moyens de mesure de valeurs de paramètre(s) du réseau et une base d'informations de gestion (MIB) stockant des données de gestion représentatives des valeurs mesurées.

Ce dispositif se caractérise par le fait qu'il comporte des moyens de gestion chargés d'adapter la configuration de l'équipement dans lequel il est implanté (ou embarqué) en fonction, notamment, des données de gestion stockées dans sa base d'informations de gestion et de règles, dites d'assurance, choisies, définissant une politique locale d'assurance.

En d'autres termes, l'invention consiste à intégrer dans des équipements (ou noeuds) du réseau un dispositif d'assurance embarqué de sorte qu'ils puissent assurer localement au moins une partie du procédé d'assurance géré par le NMS.

Le dispositif d'assurance embarqué, selon l'invention, pourra comporter des caractéristiques complémentaires qui pourront être prises séparément et/ou en combinaison, et en particulier :
- des moyens de gestion capables d'adapter la configuration de leur équipement en fonction de données d'informations provenant d'au moins un autre équipement de réseau,
- une adaptation consistant en une modification de la politique de mesure de paramètre(s) et/ou une modification de la politique d'envoi de rapport (ou « reporting ») au NMS,
- une adaptation consistant en une modification du mode de fonctionnement de l'équipement,
- des moyens de gestion comprenant des moyens d'analyse de paramètres du réseau capables de délivrer des données d'information représentatives de l'évolution temporelle, sur un intervalle choisi, de certaines valeurs de paramètre(s) du réseau (comme par exemple le trafic ou l'état d'un routeur) qui sont stockées dans la MIB. Dans ce cas, les moyens d'analyse peuvent être agencés de manière à délivrer des données d'information représentatives d'une analyse de tendance et/ou d'une analyse de profils ou de signatures (ou « baselines ») et/ou d'une analyse de discontinuité et/ou d'une agrégation de valeurs de paramètres du réseau. Par ailleurs, ces moyens d'analyse peuvent être configurables, notamment dans le but de mettre en oeuvre de nouveaux calculs, relatifs aux paramètres du réseau, transmis par le NMS,
- des moyens de gestion comprenant des moyens d'alarme chargés de déclencher l'envoi d'une alarme et/ou de données d'information au NMS et/ou à au moins un autre équipement de réseau, en fonction de règles d'assurance choisies. De telles données d'information et alarmes sont par exemple représentatives de résultat(s) d'analyse(s) ou d'agrégation(s) de données effectuée(s) par les moyens d'analyse et/ou de valeur(s) de paramètre(s) du réseau stockées dans la MIB. Par ailleurs, les moyens d'alarme peuvent être configurables,
- des moyens de gestion comprenant des moyens d'observation du réseau définissant un agent de mesure de flux de type « bout-en-bout » (ou « end-to-end »), et délivrant des données d'informations. Dans ce cas, les moyens d'observation du réseau peuvent être configurables,
- des moyens de gestion comprenant des moyens de gestion d'accords de niveau de service (ou SLA pour « Service Level Agreement ») délivrant des données d'informations. Dans ce cas, les moyens de gestion d'accords de niveau de service peuvent être configurables,
- des moyens de gestion capables d'effectuer des tests, par exemple de mesure(s) active(s) ou d'aide au diagnostic. Ces tests peuvent notamment permettre de faire remonter une information agrégée ou le résultat du test (par exemple le temps pris pour une opération de type TCP) au niveau de la couche NMS,
- des moyens de gestion capables d'assurer leur gestion en fonction d'un calendrier, de sorte que certaines (ou toutes les) fonctions d'assurance ou tests ne soient effectuées que certains jours de la semaine ou du mois ou à certaines heures, par exemple,
- des moyens de gestion comprenant des moyens de contrôle chargés de gérer le fonctionnement (et notamment la configuration) des moyens d'analyse, des moyens d'alarme, des moyens d'observation du réseau et des moyens de gestion d'accords de niveau de service, en fonction des règles d'assurance choisies et des données d'informations qu'ils délivrent. De tels moyens de contrôle peuvent se présenter sous la forme d'un moteur de règles (ou « rule engine ») dans lequel sont stockées les règles d'assurance choisies. Par ailleurs, ces moyens de contrôle peuvent être configurables,
- des moyens de gestion configurables,
- des moyens de gestion et/ou des moyens d'analyse et/ou des moyens et/ou des moyens de contrôle et/ou des moyens d'observation du réseau et/ou des moyens de gestion d'accords de niveau de service agencés de manière à pouvoir être configurés par le NMS via une interface de langage de programmation (ou API pour « Application Programming Interface ») et éventuellement via la MIB. Dans ce cas, la MIB peut être configurée ou programmée par le NMS via l'API,
- des moyens de gestion et/ou des moyens d'analyse et/ou des moyens d'alarme et/ou des moyens d'observation du réseau et/ou des moyens de gestion d'accords de niveau de service et/ou des moyens de contrôle agencés de manière à pouvoir être configurés par le NMS via des commandes dédiées, telles que des « Command Line Interface » (ou CLI).

L'invention concerne également un équipement de réseau muni d'un dispositif du type de celui présenté ci-avant. L'invention convient plus particulièrement, bien que de façon non restrictive, aux équipements de réseau tels que les routeurs, les commutateurs (ou « switchs ») et les pare-feux (ou « firewalls »).

L'invention propose également un réseau de communications équipé d'un système de gestion de réseau (NMS) et d'une multiplicité d'équipements de réseau du type de celui présenté ci-avant. Dans un mode de réalisation de type distribué, chaque équipement de réseau peut être agencé de manière à délivrer au système de gestion de réseau des alarmes et/ou des données d'information de types différents.

- L'invention peut notamment être mise en oeuvre dans toutes les technologies réseaux qui doivent être gérées, et notamment dans les réseaux de transmission (par exemple de type WDM, SONET, SDH), de données (par exemple de type Internet-IP ou ATM) ou de voix (par exemple de type classique, mobile ou NGN).

D'autres caractéristiques et avantages de l'invention apparaîtront à l'examen de la description détaillée ci-après, et des dessins annexés, sur lesquels :
- la figure 1 illustre de façon schématique un réseau de communications comprenant un système de gestion de réseau (NMS) et des équipements de réseau selon l'invention, et
- la figure 2 illustre de façon schématique un exemple de réalisation d'un équipement de réseau selon l'invention.

Les dessins annexés pourront non seulement servir à compléter l'invention, mais aussi contribuer à sa définition, le cas échéant.

L'invention a pour objet de permettre la gestion locale, par des équipements de réseau, d'une partie du procédé d'assurance géré par le système de gestion de réseau (ou NMS pour « Network Management System ») d'un réseau de communications.

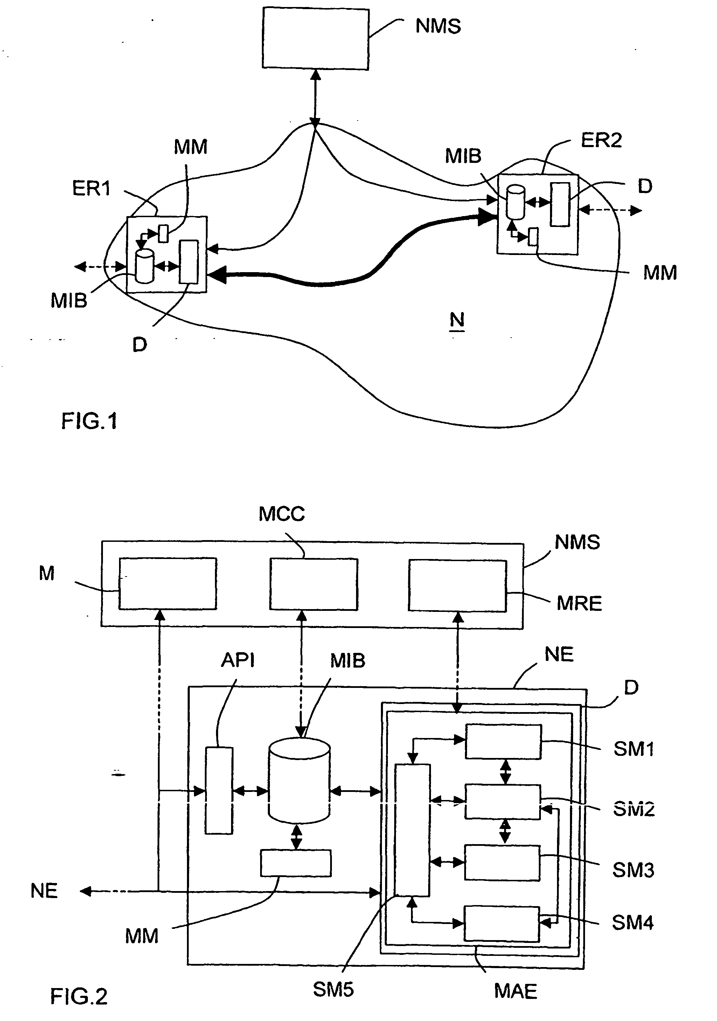

Comme cela est illustré sur la figure 1, un réseau de communications N comporte schématiquement une multiplicité d'équipements de réseau NEi (ici i = 1, 2, mais il peut prendre n'importe quelle valeur), comme par exemple des serveurs équipés d'un pare-feu ou (« firewall »), des commutateurs (ou « switchs »), des routeurs périphériques (ou « edge routers ») ou des routeurs de coeur (ou « core routers »), pouvant échanger des données, selon un protocole de gestion de réseau, avec un système de gestion de réseau, et notamment avec son serveur de gestion NMS.

Chaque équipement NEi comporte classiquement une base d'informations de gestion MIB (« Management Information Base »), également appelée base d'instances d'objets. Chaque MIB stocke des données de gestion représentatives de valeurs de champs d'information qui caractérisent l'équipement NEi associé. Certains de ces champs d'information désignent des paramètres du réseau dont les valeurs instantanées sont mesurées par des sondes MM implantées dans, ou gérées par, l'équipement NEi. Par ailleurs, chaque MIB est associée à une définition de base d'informations de gestion (non représentée), également appelée définition de MIB, stockée dans le système de gestion de réseau et accessible au serveur de gestion NMS.

Dans ce qui suit, on considère à titre d'exemple non limitatif que le réseau de communications N est de type Internet (IP) et que le protocole de gestion du réseau est le protocole SNMP (pour « Simple Network Management Protocol » RFC 2571-2580). Bien entendu, l'invention s'applique à d'autres types de réseau, comme par exemple aux réseaux de transmission de type WDM, SONET ou SDH, de données de type ATM, ou de voix de type classique, mobile ou NGN, et à d'autres protocoles de gestion de réseau, comme par exemple TL1, CORBA ou CMISE/CMIP.

Par ailleurs, on considère dans ce qui suit que les équipements de réseau NEi sont des routeurs périphériques (ou de bordure) agissant en tant qu'agents d'observation de flux de type « bout-en-bout » (ou « end-to-end »). Ces routeurs sont généralement placés aux frontières du réseau et permettent l'établissement de liens avec d'autres réseaux. Ces agents sont généralement destinés à effectuer des mesures de bout en bout pour des problèmes d'échelle (ou « scalability »). Mais, bien entendu, l'invention n'est pas limitée à ce seul type d'équipement de réseau. Elle concerne tous les équipements de réseau capables d'échanger des données de gestion avec le NMS, et notamment les routeurs périphériques qui n'agissent pas en tant qu'observateurs, les routeurs de coeur, les commutateurs et les pare-feux.

Chaque équipement de réseau NEI est généraiemeni configuré spécifiquement de manière à transmettre au NMS (ou couche NMS) des données d'information représentatives de mesures qu'il a effectuées avec sa ou ses sondes MM et qu'il a stockées dans sa MIB, ainsi que des alarmes signalant des problèmes ou des pannes. La configuration est généralement définie par une ou plusieurs politiques. Par exemple, une première politique est relative aux conditions d'envoi (ou « reporting ») de valeurs mesurées par l'équipement NEi à l'aide de ses sondes MM. Une deuxième politique peut concerner la ou les mesures de paramètre(s) que l'équipement NEi doit effectuer avec sa ou ses sondes MM. Une troisième politique peut concerner le mode de fonctionnement de l'équipement NEi. Ces politiques sont habituellement définies pour chaque équipement NEi par un module de configuration MC du NMS. Elles sont transmises aux équipements NEi, via le réseau N, à l'aide du protocole de gestion (ici SNMP).

Mais, le NMS, et notamment son module de collection MCC (ou « collector »), peut également, lorsqu'il l'estime nécessaire, adresser à un équipement de réseau NEi des requêtes pour qu'il lui transmette les valeurs de certains des champs d'information qui sont stockés dans sa MIB. C'est ce que l'homme de l'art appelle, en anglais, le « polling ».

Comme cela est mieux illustré sur la figure 2, l'invention propose un dispositif de gestion locale d'assurance D destiné à être soit implanté (ou embarqué) dans un équipement NEi, soit intégré dans un boîtier externe raccordé directement à un équipement NEi. Dans ce qui suit, on considère que le dispositif D est embarqué dans un équipement NEi.

Ce dispositif D selon l'invention comporte un module d'assurance MAE (ou module de gestion locale d'assurance) chargé d'adapter la configuration de l'équipement NEi, dans lequel il est embarqué, en fonction de règles, dites d'assurance, choisies, des données de gestion stockées dans sa MIB, et d'éventuelles données d'information qu'il reçoit des autres équipements de réseau.

On entend ici par « adapter », le fait de modifier une politique de mesure de paramètre(s) (voire mettre en place une nouvelle politique de mesure(s) ou re-configurer la politique de mesure(s)) et/ou une politique d'envoi de rapport (ou « reporting ») au NMS et/ou le mode de fonctionnement de l'équipement NEi, initialement défini(s) par le module de configuration MC du NMS.

Par ailleurs, on entend par « règles d'assurance », des règles définissant la politique d'assurance locale de l'équipement compte tenu des valeurs prises par certains paramètres du réseau, stockées dans sa MIB, ou d'évènements extérieurs, tels qu'une action de la couche NMS ou d'un autre routeur.

Le module d'assurance embarqué MAE permet ainsi d'embarquer dans un équipement NEi certaines fonctions d'assurance de manière à le rendre « plus intelligent », à limiter le nombre d'informations qui transitent dans le réseau, et éventuellement à permettre sa reconfiguration partielle, en fonction de règles d'assurance.

Afin de gérer localement la politique d'assurance, le module d'assurance MAE comporte préférentiellement un premier sous-module SM1 chargé d'appliquer un ou plusieurs traitements aux valeurs de certains champs d'information stockés dans la MIB. Plus précisément, ces traitements consistent à appliquer aux valeurs des champs d'information choisis, en fonction de règles d'assurance dédiées, des formules ou des équations, définies par le module de configuration MC du NMS, afin de délivrer des données d'information.

Par exemple, le premier sous-module SM1 est chargé d'effectuer des analyses de tendance sur un intervalle choisi (ou suivant un calendrier prédéfini), utiles aux anticipations de problèmes ou de pannes. Il peut notamment signaler que le pourcentage d'utilisation d'un CPU d'un routeur va atteindre un seuil critique dans une heure, ou que la bande passante d'un LSP va dépasser le seuil choisi dans deux heures.

Il peut être également chargé d'effectuer des analyses de profils ou de signatures (ou « baselines »). Cela est notamment utile lorsque l'on cherche, par exemple, à reconnaître ou identifier un profil caractéristique d'utilisation, tel qu'une attaque spécifique d'un routeur, ou un mode de facturation (ou « billing »).

Il peut être également chargé d'effectuer des analyses de discontinuité de flux ou de trafic. Par exemple, en cas de surcharge d'un réseau, des paquets sont supprimés (ou « dropped »), si bien que la détection d'une discontinuité sur le paramètre de suppression (de 0 à x) permet d'informer que l'on a effectivement des paquets supprimés.

Il peut encore être chargé d'effectuer des agrégations de valeurs de paramètres du réseau, par exemple pour appliquer des formules du module de collection de données MCC dans le routeur ou pour calculer une moyenne sur une période donnée (par exemple la bande passante moyenne utilisée au cours de la dernière semaine). Dans ce cas, les valeurs agrégées peuvent être stockées dans la MIB et en être extraites sur requête de polling issue du module de collection MCC du NMS.

A titre d'exemple illustratif, le premier sous-module SM1 peut être chargé d'estimer l'évolution prévisionnelle (ou tendance) du nombre de paquets abandonnés (« dropped »), ainsi que l'évolution prévisionnelle de la bande passante utilisée et/ou de la charge de calcul (CPU) de l'équipement NEi. Il peut être également agencé pour effectuer des tests, par exemple de mesure(s) active(s) ou d'aide au diagnostic. Ces tests peuvent notamment permettre de faire remonter une information agrégée ou le résultat du test (par exemple le temps pris pour une opération de type TCP) au niveau de la couche NMS.

Préférentiellement, le premier sous-module SM1 délivre des données d'informations représentatives du résultat de ses analyses (ou estimations) à un (cinquième) sous-module de gestion (SM5), qui décide des actions à entreprendre en fonction de la politique d'assurance locale de son équipement NEi.

Le module d'assurance MAE comporte également de préférence un deuxième sous-module SM2 chargé de déclencher l'envoi d'alarme(s) et/ou de données d'information (ou rapports) sur ordre du cinquième sous-module SM5, en fonction de règles d'assurance qui lui sont dédiées.

Mais, on peut également envisager que le premier sous-module SM1 alimente le deuxième sous-module SM2 en données d'information, de sorte qu'il leur applique certaines des règles d'assurance et décide soit de leur envoi, soit de l'émission d'une alarme, à destination du NMS, et plus précisément d'un module de réception d'évènements MRE, et/ou d'au moins un autre équipement de réseau.

Dans l'exemple illustré d'un routeur périphérique de type « bout-en-bout », le module d'assurance MAE comporte également de préférence un troisième sous-module SM3 chargé d'observer le réseau, et notamment le trafic de type « bout-en-bout », en fonction de règles d'assurance qui lui sont dédiées. Par exemple, on dispose d'une sonde embarquée, pour effectuer les mesures de bout-en-bout. Cette sonde embarquée est alors configurée de manière à déterminer le flux à étudier et les résultats des mesures alimentent des règles d'assurance dédiées. Par exemple, l'une de ces règles peut être : « si entre deux routeurs périphériques on mesure deux flux différents, alors on agrége la mesure des deux flux pour limiter le calcul ».

Dans ce cas, le troisième sous-module SM3 définit ce que l'homme de l'art appelle un agent de mesure de flux « bout-en-bout » (ou « end-to-end »).

Préférentiellement, le troisième sous-module SM3 délivre des données d'informations représentatives du résultat de ses observations (ou mesures) au (cinquième) sous-module de gestion (SM5), qui décide des actions à entreprendre en fonction de la politique d'assurance locale de son équipement NEi. Mais, on pourrait également envisager que le troisième sous-module SM3 alimente le deuxième sous-module SM2 en données d'informations, de sorte qu'il leur applique certaines des règles d'assurance et décide soit de leur envoi, soit de l'émission d'une alarme, à destination du NMS, et plus précisément d'un module de réception d'évènements MRE, et/ou d'au moins un autre équipement de réseau.

Par ailleurs, et comme illustré sur la figure 2, le module d'assurance MAE peut comporter un quatrième sous-module SM4 chargé de gérer localement certains accords de niveau de service (ou SLA pour « Service Level Agreement »), en fonction de règles d'assurance qui lui sont dédiées. Par exemple, le sous-module SM4 connaît l'accord de niveau de service (SLA) d'un client, de sorte qu'il peut être chargé de vérifier si ce SLA est bien respecté, et générer une alarme (ou données d'informations) si ce n'est pas le cas (ou si la situation se dégrade).

Préférentiellement, le quatrième sous-module SM4 délivre des données d'informations représentatives de comptes-rendus de gestion au cinquième sous-module SM5, qui décide des actions à entreprendre en fonction de la politique d'assurance locale de son équipement NEi. Mais, on pourrait également envisager que le quatrième sous-module SM4 alimente le deuxième sous-module SM2 en données d'information, de sorte qu'il leur applique certaines des règles d'assurance et décide soit de leur envoi, soit de l'émission d'une alarme, à destination du NMS, et plus précisément d'un module de réception d'évènements MRE, et/ou d'au moins un autre équipement de réseau.

Comme indiqué plusieurs fois ci-avant, le module d'assurance MAE comporte un cinquième sous-module SM5 (ou module de contrôle) chargé de contrôler le fonctionnement des autres sous-modules (ici SM1 à SM4). Plus préférentiellement, ce cinquième sous-module SM5 se présente sous la forme d'un moteur de règles (ou « rule engine ») dans lequel sont stockées toutes les règles d'assurance dédiées aux autres sous-modules. Il s'agit par exemple d'un « Java expert System Shell ».

Alors que chaque sous-module SM1 à SM4 effectue des calculs et/ou des analyses et/ou des rapports définis à partir de règles d'assurance dédiées, le cinquième sous-module SM5 gère préférentiellement l'ensemble desdites règles d'assurance dédiées. Par « gérer l'ensemble des règles », on entend ici gérer les conditions et les actions définies par les différentes règles.

Le cinquième sous-module SM5 a plus précisément deux fonctions principales.

Une première fonction consiste à ordonner au deuxième sous-module SM2 de générer une alarme, ou d'adresser un rapport, à destination de la couche NMS (ou d'un autre équipement du réseau), parce qu'en appliquant une règle d'assurance à des données délivrées par l'un des autres sous-modules SM1 à SM4, il s'est aperçu que la condition correspondante n'était pas satisfaite.

Par exemple, il ordonne la génération d'une alarme parce que les données d'analyse délivrées par le premier sous-module SM1 ne satisfont pas la condition qui leur est associée par la politique locale d'assurance, ou parce que le quatrième sous-module SM4 l'a averti qu'un SLA qu'il gérait localement n'était pas respecté.

Une seconde fonction consiste à décider de l'adaptation de la configuration de l'équipement NEi, et notamment du module d'assurance embarqué MAE, en fonction des données d'informations qu'il reçoit des autres sous-modules SM1 à SM4 et des règles d'assurance qui définissent la politique locale d'assurance.

Par exemple, compte tenu des résultats d'analyse de certains paramètres du réseau, fournis par le premier sous-module SM1, le cinquième sous-module SM5 peut décider de modifier son mode d'analyse ou bien demander au deuxième sous-module SM2 d'adresser une alarme à la couche NMS- de sorte qu'elle adresse de nouvelles formules d'analyse. Il peut également décider de modifier un calendrier d'analyses, par exemple effectuées par le premier sous-module SM1.

Lorsque le cinquième sous-module SM5 décide de modifier le fonctionnement (ou la configuration) de l'un des sous-modules SM1 à SM4, il lui adresse les instructions correspondantes, ce qui revient à lui demander de modifier ses calculs et/ou analyses et/ou rapports. De même, le cinquième sous-module SM5 peut, lorsque la politique locale l'y autorise, être chargé de rétroagir sur la configuration du routeur via un module de reconfiguration embarqué.

Il est important de noter que les actions de reconfiguration (ou de modification de fonctionnement) décidées par le cinquième sous-module SM5 sont définies par les règles d'assurance de la politique locale. En d'autres termes, le cinquième sous-module SM5 ne fait qu'ordonner l'exécution d'actions prédéfinies.

Le cinquième sous-module SM5 peut également appliquer des règles d'assurance choisies à des données d'information provenant d'autres équipements de réseau NEj. En effet, un équipement NEj peut être chargé de transmettre des valeurs qu'il a mesurées et/ou agrégées à un autre équipement NEi équipé d'un dispositif D chargé de traiter ces valeurs de manière à générer de nouvelles données d'information qui peuvent être ensuite remontées au NMS ou envoyées à un autre équipement NEj.

La politique d'assurance locale peut être par exemple définie comme suit:
- si la tendance, estimée par le premier sous-module SM1, du nombre de paquets abandonnés augmente de plus de 5%, alors une alarme de tendance doit être émise,
- si la bande passante utilisée, analysée par le premier sous-module SM1, demeure inférieure à un premier seuil, alors la valeur de la bande passante utilisée doit être transmise chaque jour au module de collection MCC du NMS,
- si la bande passante utilisée, analysée par le premier sous-module SM1, est comprise entre un premier et un second seuils, alors la valeur moyenne de la bande passante utilisée doit être transmise toutes les heures au module de collection MCC du NMS,
- si l'intervalle de temps, estimé par le premier sous-module SM1, pour que la bande passante utilisée atteigne le second seuil, est inférieur à deux heures, alors une alarme de tendance doit être émise,
- si la charge de calcul (CPU) de l'équipement NEi, estimée par le premier sous-module SM1, est supérieure à 80%, alors les analyses de tendances ne doivent plus être effectuées,
- si la perte de paquets, estimée par le premier sous-module SM1, augmente de 5%, alors la taille des mémoires tampons (« buffers ») doit être augmentée de 5%.

En d'autres termes la politique d'assurance locale consiste ici, d'une première part, à transmettre chaque jour la mesure de la bande passante si le comportement de l'équipement NEi est normal, mais à activer les analyses de tendance et à augmenter la fréquence d'envoi des rapports si le comportement change, d'une deuxième part, à interrompre toutes les tâches impliquant un paramètre si la valeur de ce paramètre devient critique, et d'une troisième part, à modifier le fonctionnement interne de l'équipement NEi, représenté par un paramètre, en fonction de la variation dudit paramètre.

De préférence, le module d'assurance MAE est configurable à distance, via le réseau N, par le module de configuration MC du NMS. Plus précisément, chaque sous-module SM1 à SM5 est préférentiellement configurable. Cela permet en effet d'adapter à distance, le fonctionnement de chaque sous-module SM en fonction des circonstances, par exemple du fait de l'évolution du réseau N, et/ou en fonction des besoins, par exemple lorsque le gestionnaire d'assurance centralisé du NMS a besoin de disposer des valeurs de nouveaux paramètres, ou de paramètres agrégés complémentaires, ou encore de nouvelles analyses réelles ou prospectives (envoi de nouvelles formules ou équations).

Deux modes de configuration peuvent être envisagés. Un premier mode consiste à transmettre indirectement les données de configuration au module d'assurance MAE via une interface de langage de programmation (ou API pour « Application Programming Interface ») implantée dans l'équipement NEi, ainsi qu'éventuellement via la MIB. Cette interface API peut également, et avantageusement, permettre au module de configuration MC du NMS de configurer ou de programmer la MIB, de sorte qu'elle ne soit pas de type statique. Le module d'assurance MAE peut en effet coopérer avec la MIB pour se configurer et définir de nouvelles entrées dans la MIB, afin de pouvoir accéder à ces nouvelles entrées. Dans ce cas, on accède à la MIB via des requêtes SNMP (« GET » et « SET »), ce qui permet une configuration aisée (voire même une gestion des droits et de la sécurité des échanges avec SNMP 3) ; la MIB permet d'avoir une interface « normalisée » du fait que ses champs sont accessibles via des OIDs (pour « Object Identifiers ») bien définis. On entend ici par « Object Identifier », un identifiant objet d'une variable MIB que l'on souhaite récupérer. Un tel identifiant est généralement normalisé, par exemple par le standard RFC 1213 pour la MIB II.

Un second mode consiste à transmettre directement les données de configuration au module d'assurance MAE à l'aide de commandes dédiées, telles que des « Command Line Interface » (ou CLI).

Le module d'assurance MAE peut être réalisé sous la forme de circuits électroniques, de modules logiciels (ou informatiques), ou d'une combinaison de circuits et de logiciels.

L'invention ne se limite pas aux modes de réalisation de dispositif de gestion locale d'assurance et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit des équipements de réseau capables de gérer localement le procédé d'assurance supervisé par le NMS. Mais, on peut envisager un fonctionnement distribué dans lequel certains au moins des équipements de réseau sont équipés de dispositifs de gestion locale d'assurance simplifiés, chargés de transmettre des alarmes et/ou des données d'informations spécifiques et complémentaires à un serveur d'assurance du NMS. Bien entendu, dans ce cas les équipements de réseau demeurent capables d'adapter leur configuration en fonction des valeurs des données de gestion stockées dans leur MIB.

Par ailleurs, on a décrit un mode de réalisation dans lequel le dispositif selon l'invention était implanté ou embarqué dans l'équipement de réseau. Mais, le dispositif selon l'invention peut être agencé sous la forme d'un élément externe implanté dans un boîtier directement raccordé à l'équipement de réseau.

## Revendications

1. Dispositif (D) de gestion locale d'assurance embarqué dans un équipement de réseau (NE) d'un réseau de communications (N) équipé d'un système de gestion de réseau (NMS), ledit équipement (NE) présentant une configuration choisie et comportant des moyens (MM) de mesure de valeurs de paramètre(s) du réseau et une base d'informations de gestion (MIB) propre à stocker des données de gestion représentatives desdites valeurs mesurées, **caractérisé en ce qu'**il comprend des moyens de gestion (MAE) agencés pour adapter la configuration dudit équipement (NE) en fonction d'au moins lesdites données de gestion stockées dans ladite base d'informations de gestion (MIB) et de règles, dites d'assurance, choisies, définissant une politique locale d'assurance, ladite adaptation consiste en une modification d'une politique de mesure de paramètre(s) et/ou une modification d'une politique d'envoi de rapport audit système de gestion de réseau (NMS).

2. Dispositif selon la revendication 1, **caractérisé en ce que** lesdits moyens de gestion (MAE) sont agencés pour adapter ladite configuration en fonction de données d'informations provenant d'au moins un autre équipement de réseau (NE).

3. Dispositif selon l'une des revendications 1 et 2, **caractérisé en ce que** ladite adaptation consiste en une modification de son mode de fonctionnement.

4. Dispositif selon l'une des revendications 1 à 3, **caractérisé en ce que** lesdits moyens de gestion (MAE) comprennent des moyens d'analyse (SM1) agencés pour déterminer, en fonction de certaines desdites règles d'assurance choisies, des données d'information représentatives de l'évolution temporelle, sur un intervalle choisi, de valeurs de paramètre(s) du réseau stockées dans ladite base d'informations de gestion (MIB).

5. Dispositif selon la revendication 4, **caractérisé en ce que** lesdits moyens d'analyse (SM1) sont agencés pour délivrer des données d'information représentatives d'une analyse de tendance et/ou d'une analyse de profils ou de signatures et/ou d'une analyse de discontinuité et/ou d'une agrégation de valeurs de paramètres du réseau.

6. Dispositif selon l'une des revendications 4 et 5, **caractérisé en ce que** lesdits moyens d'analyse (SM1) sont configurables.

7. Dispositif selon la revendication 6, **caractérisé en ce que** lesdits moyens d'analyse (SM1) sont agencés pour mettre en oeuvre de nouveaux calculs, relatifs aux paramètres du réseau, reçus dudit système de gestion de réseau (NMS).

8. Dispositif selon l'une des revendications 1 à 7, **caractérisé en ce que** lesdits moyens de gestion (MAE) comprennent des moyens d'alarme (SM2) propres à déclencher l'envoi d'une alarme et/ou de données d'information audit système de gestion de réseau (NMS) et/ou à au moins un autre équipement de réseau (NE), en fonction de certaines desdites règles d'assurance choisies.

9. Dispositif selon la revendication 8, **caractérisé en ce que** lesdits moyens d'alarme (SM2) sont configurables.

10. Dispositif selon l'une des revendications 8 et 9, **caractérisé en ce que** lesdites données d'information et lesdites alarmes sont représentatives d'un résultat d'analyse, effectuée par lesdits moyens d'analyse (SM1), et/ou d'une agrégation de données, effectuée par lesdits moyens d'analyse (SM1), et/ou d'une valeur de paramètre du réseau stockée dans ladite base d'informations de gestion (MIB).

11. Dispositif selon l'une des revendications 1 à 10, **caractérisé en ce que** lesdits moyens de gestion (MAE) comprennent des moyens d'observation du réseau (SM3) définissant un agent de mesure de flux de type « bout-en-bout »), et agencés pour déterminer des données d'information représentatives dudit flux de type bout-en-bout en fonction de certaines desdites règles d'assurance choisies.

12. Dispositif selon la revendication 11, **caractérisé en ce que** lesdits moyens d'observation du réseau (SM3) sont configurables.

13. Dispositif selon l'une des revendications 1 à 12, **caractérisé en ce que** lesdits moyens de gestion (MAE) comprennent des moyens de gestion d'accords de niveau de service (SM4) agencés pour déterminer des données d'information représentatives de ladite gestion des accords en fonction de certaines desdites règles d'assurance choisies.

14. Dispositif selon la revendication 13, **caractérisé en ce que** lesdits moyens de gestion d'accords de niveau de service (SM4) sont configurables.

15. Dispositif selon l'une des revendications 2 à 14, **caractérisé en ce que** lesdits moyens de gestion (MAE) comprennent des moyens de contrôle (SM5) propres à gérer le fonctionnement desdits moyens d'analyse (SM1), desdits moyens d'alarme (SM2), desdits moyens d'observation du réseau (SM3) et desdits moyens de gestion d'accords de niveau de service (SM4), en fonction de certaines au moins desdites règles d'assurance choisies.

16. Dispositif selon la revendication 15, **caractérisé en ce que** lesdits moyens de contrôle (SM5) sont alimentés en données d'information par lesdits moyens d'analyse (SM1) et/ou lesdits moyens d'observation du réseau (SM3) et/ou lesdits moyens de gestion d'accords de niveau de service (SM4), et sont agencés pour ordonner auxdits moyens d'alarme (SM2) de générer des alarmes et/ou des rapports en cas de détection du non respect d'une règle d'assurance par des données d'information reçues.

17. Dispositif selon l'une des revendications 15 et 16, **caractérisé en ce que** lesdits moyens de contrôle (SM5) sont agencés sous la forme d'un moteur de règles, « rule engine », stockant lesdites règles d'assurance choisies.

18. Dispositif selon l'une des revendications 15 à 17, **caractérisé en ce que** lesdits moyens de contrôle (SM5) sont configurables.

19. Dispositif selon l'une des revendications 1 à 18, **caractérisé en ce que** lesdits moyens de gestion (MAE) sont propres à être configurés par ledit système de gestion de réseau (NMS) via une interface de langage de programmation (API) dudit équipement (NE).

20. Dispositif selon l'une des revendications 1 à 19, **caractérisé en ce que** lesdits moyens de gestion (MAE) sont propres à être configurés par ledit système de gestion de réseau (NMS) via une interface de langage de programmation (API) dudit équipement (NE) et via ladite base d'informations de gestion (MIB).

21. Dispositif selon l'une des revendications 19 et 20, **caractérisé en ce que** lesdits moyens d'analyse (SM1) et/ou lesdits moyens d'alarme (SM2) et/ou lesdits moyens d'observation du réseau (SM3) et/ou lesdits moyens de contrôle (SM5) et/ou lesdits moyens de gestion d'accords de niveau de service (SM4) sont propres à être configurés par ledit système de gestion de réseau (NMS), via ladite interface de langage de programmation (API).

22. Dispositif selon l'une des revendications 19 et 20, **caractérisé en ce que** lesdits moyens d'analyse (SM1) et/ou lesdits moyens d'alarme (SM2) et/ou lesdits moyens d'observation du réseau (SM3) et/ou lesdits moyens de contrôle (SM5) et/ou lesdits moyens de gestion d'accords de niveau de service (SM4) sont propres à être configurés par ledit système de gestion de réseau (NMS), via ladite interface de langage de programmation (API) et via ladite base d'informations de gestion (MIB).

23. Dispositif selon l'une des revendications 1 à 22, **caractérisé en ce que** lesdits moyens de gestion (MAE) sont propres à être configurés par ledit système de gestion de réseau (NMS) via des commandes dédiées.

24. Dispositif selon la revendication 23, **caractérisé en ce que** lesdits moyens d'analyse (SM1) et/ou lesdits moyens d'alarme (SM2) et/ou lesdits moyens d'observation du réseau (SM3) et/ou desdits moyens de gestion d'accords de niveau de service (SM4) et/ou lesdits moyens de contrôle (SM5) sont agencés pour être configurés par ledit système de gestion de réseau (NMS) via des commandes dédiées.

25. Dispositif selon l'une des revendications 23 et 24, **caractérisé en ce que** lesdites commandes sont de type « Command Line Interface ».

26. Equipement de réseau (NE) pour un réseau de communications (N) équipé d'un système de gestion de réseau (NMS), ledit équipement (NE) présentant une configuration choisie et comportant des moyens (MM) de mesure de valeurs de paramètre(s) du réseau et une base d'informations de gestion (MIB) propre à stocker des données de gestion représentatives desdites valeurs mesurées, comprenant un dispositif (D) selon l'une des revendications précédentes.

27. Equipement selon la revendication 26, **caractérisé en ce qu'**il comprend une interface de langage de programmation (API), et **en ce que** ladite base d'informations de gestion (MIB) est propre à être configurée par ledit système de gestion de réseau (NMS) via ladite interface de langage de programmation (API).

28. Equipement selon l'une des revendications 26 et 27, **caractérisé en ce qu'**il comprend une interface de langage de programmation (API), et **en ce que** ladite base d'informations de gestion (MIB) est propre à être programmée par ledit système de gestion de réseau (NMS) via ladite interface de langage de programmation (API).

29. Equipement selon l'une des revendications 26 à 28, **caractérisé en ce qu'**il est choisi dans un groupe comprenant au moins les routeurs, les commutateurs et les pare-feux.

30. Réseau de communications (N) comportant un système de gestion de réseau (NMS), comprenant une multiplicité d'équipements de réseau (NE) selon l'une des revendications 26 à 29.

31. Réseau selon la revendication 30, **caractérisé en ce que** chaque équipement (NE) est agencé pour délivrer audit système de gestion de réseau (NMS) des alarmes et/ou des données d'information de types différents.

32. Utilisation d'un dispositif selon l'une des revendications 1 à 25 dans un équipement d'un réseau de communication choisi dans un groupe comprenant les réseaux de transmission, de type WDM, SONET et SDH, de données type Internet-IP et ATM, et de voix, de type classique, mobile et NGN.

## Patentansprüche

1. Vorrichtung (D) zum lokalen Sicherheitsmanagement, die in ein Netzwerkgerät (NE) eines Telekommunikationsnetzes (N) integriert und mit einem Netzwerk-Managementsystem (NMS) ausgestattet ist, wobei das genannte Gerät eine gewählte Konfiguration aufweist und Vorrichtungen (MM) zur Messung der Werte von Netzwerkparametern sowie ein Management-Informationssystem (MIB) zur Speicherung der Managementdaten umfasst, die für die genannten Messwerte repräsentativ sind, **dadurch gekennzeichnet, dass** es Managementvorrichtungen (MAE) umfasst, die entsprechend ausgeführt sind, um die Konfiguration des genannten Geräts (NE) in Abhängigkeit zumindest von den genannten Managementdaten anzupassen, die in dem genannten Management-Informationssystem (MIB) gespeichert sind, sowie in Abhängigkeit von den ausgewählten, so genannten Sicherheitsregeln, die eine lokale Sicherheitsrichtlinie definieren, wobei die genannte Anpassung in der Änderung einer Richtlinie zur Messung des/der Parameter/-s und/oder der Änderung einer Richtlinie zur Übermittlung eines Berichts an das genannte Netzwerk-Managementsystem (NMS) besteht.

2. Vorrichtung gemäß Anspruch 1, **dadurch gekennzeichnet, dass** die genannten Managementvorrichtungen (MAE) entsprechend ausgeführt sind, um die genannte Konfiguration in Abhängigkeit von den Informationsdaten anzupassen, die von mindestens einem anderen Netzwerkgerät (NE) stammen.

3. Vorrichtung gemäß einem der Ansprüche 1 und 2, **dadurch gekennzeichnet, dass** die genannte Anpassung in einer Änderung ihres Funktionsmodus besteht.

4. Vorrichtung gemäß einem der Ansprüche 1 bis 3, **dadurch gekennzeichnet, dass** die genannten Managementvorrichtungen (MAE) Analysevorrichtungen (SM1) umfassen, die entsprechend ausgeführt sind, um in Abhängigkeit von bestimmten der genannten, ausgewählten Sicherheitsregeln Informationsdaten auszuwählen, die für die zeitliche Entwicklung der Werte des/der Netzwerkparameter/-s, die in dem genannten Management-Informationssystem (MIB) gespeichert sind, über einen gewählten Zeitraum repräsentativ sind.

5. Vorrichtung gemäß Anspruch 4, **dadurch gekennzeichnet, dass** die genannten Analysevorrichtungen (SM1) entsprechend ausgeführt sind, dass sie Informationsdaten liefern, die für eine Tendenzanalyse und/oder eine Profil- oder Signaturenanalyse und/oder eine Unterbrechungsanalyse und/oder die Zulassung von Werten für die Netzwerkparameter repräsentativ sind.

6. Vorrichtung gemäß einem der Ansprüche 4 und 5, **dadurch gekennzeichnet, dass** die genannten Analysevorrichtungen (SM1) konfigurierbar sind.

7. Vorrichtung gemäß Anspruch 6, **dadurch gekennzeichnet, dass** die genannten Analysevorrichtungen (SM1) entsprechend ausgeführt sind, um neue Berechnungen in Bezug auf die Netzwerkparameter auszuführen, die von dem genannten Netzwerk-Managementsystem (NMS) empfangen werden.

8. Vorrichtung gemäß einem der Ansprüche 1 bis 7, **dadurch gekennzeichnet, dass** die genannten Managementvorrichtungen (MAE) Alarmvorrichtungen (SM2) beinhalten, die speziell zur Übermittlung einer Alarmmeldung und/oder Informationsdaten an das genannte Netzwerk-Managementsystem (NMS) und/oder an mindestens ein anderes Netzwerkgerät (NE) in Abhängigkeit von bestimmten der genannten, ausgewählten Sicherheitsregeln konzipiert sind.

9. Vorrichtung gemäß Anspruch 8, **dadurch gekennzeichnet, dass** die genannten Alarmvorrichtungen (SM2) konfigurierbar sind.

10. Vorrichtung gemäß einem der Ansprüche 8 und 9, **dadurch gekennzeichnet, dass** die genannten Informationsdaten und die genannten Alarmmeldungen repräsentativ für ein Analyseergebnis sind, das von den genannten Analysevorrichtungen (SM1) ausgeführt wurde, und/oder für die Zulassung von Daten, die von den genannten Analysevorrichtungen (SM1) ausgeführt wurde, und/oder für den Wert von Netzwerkparametern, die in dem genannten Management-Informationssystem (MIB) gespeichert sind.

11. Vorrichtung gemäß einem der Ansprüche 1 bis 10, **dadurch gekennzeichnet, dass** die genannten Managementvorrichtungen (MAE) Vorrichtungen zur Beobachtung des Netzwerks (SM3) umfassen, die ein Mittel zur Messung des Strecken-Datenflusses definieren und entsprechend ausgeführt sind, um die Informationsdaten, die für den genannten Strecken-Datenfluss repräsentativ sind, in Abhängigkeit von bestimmten der genannten, ausgewählten Sicherheitsregeln festzulegen.

12. Vorrichtung gemäß Anspruch 11, **dadurch gekennzeichnet, dass** die genannten Vorrichtungen zur Beobachtung des Netzwerks (SM3) konfigurierbar sind.

13. Vorrichtung gemäß einem der Ansprüche 1 bis 12, **dadurch gekennzeichnet, dass** die genannten Managementvorrichtungen (MAE) Vorrichtungen zum Management von Dienstgütevereinbarungen (SM4) umfassen, die entsprechend ausgeführt sind, um die Informationsdaten festzulegen, die für das genannte Vereinbarungsmanagement in Abhängigkeit von bestimmten der genannten, ausgewählten Sicherheitsregeln repräsentativ sind.

14. Vorrichtung gemäß Anspruch 13, **dadurch gekennzeichnet, dass** die genannten Vorrichtungen zum Management von Dienstgütevereinbarungen (SM4) konfigurierbar sind.

15. Vorrichtung gemäß einem der Ansprüche 2 bis 14, **dadurch gekennzeichnet, dass** die genannten Managementvorrichtungen (MAE) Kontrollvorrichtungen (SM5) umfassen, die dazu dienen, die Funktionsweise der genannten Analysevorrichtungen (SM1), der genannten Alarmvorrichtungen (SM2), der genannten Vorrichtungen zur Netzwerkbeobachtung (SM3) und der genannten Vorrichtungen zum Management von Dienstgütevereinbarungen (SM4) in Abhängigkeit von zumindest bestimmten der genannten ausgewählten Sicherheitsregeln zu verwalten.

16. Vorrichtung gemäß Anspruch 15, **dadurch gekennzeichnet, dass** die genannten Kontrollvorrichtungen (SM5) die Informationsdaten von den genannten Analysevorrichtungen (SM1) und/oder den genannten Vorrichtungen zur Netzwerkbeobachtung (SM3) und/oder den genannten Vorrichtungen zum Management von Dienstgütevereinbarungen (SM4) erhalten und entsprechend ausgeführt sind, um die genannten Alarmvorrichtungen (SM2) zu veranlassen, Alarmmeldungen und/oder Berichte zu erzeugen, falls die Nichteinhaltung einer Sicherheitsregel über die empfangenen Informationsdaten erfasst wird.

17. Vorrichtung gemäß einem der Ansprüche 15 und 16, **dadurch gekennzeichnet, dass** die genannten Kontrollvorrichtungen (SM5) in Form einer Regelmaschine (« Rule Engine ») ausgeführt sind, die die genannten, ausgewählten Sicherheitsregeln speichert.

18. Vorrichtung gemäß einem der Ansprüche 15 bis 17, **dadurch gekennzeichnet, dass** die genannten Kontrollvorrichtungen (SM5) konfigurierbar sind.

19. Vorrichtung gemäß einem der Ansprüche 1 bis 18, **dadurch gekennzeichnet, dass** die genannten Managementvorrichtungen (MAE) von dem genannten Netzwerk-Managementsystem (NMS) über die API-Schnittstelle des genannten Geräts (NE) konfiguriert werden können.

20. Vorrichtung gemäß einem der Ansprüche 1 bis 19, **dadurch gekennzeichnet, dass** die genannten Managementvorrichtungen (MAE) von dem genannten Netzwerk-Managementsystem (NMS) über die API-Schnittstelle des genannten Geräts (NE) und über das genannte Management-Informationssystem (MIB) konfiguriert werden können.

21. Vorrichtung gemäß einem der Ansprüche 19 und 20, **dadurch gekennzeichnet, dass** die genannten Analysevorrichtungen (SM1) und/oder die genannten Alarmvorrichtungen (SM2) und/oder die genannten Vorrichtungen zur Netzwerkbeobachtung (SM3) und/oder die genannten Kontrollvorrichtungen (SM5) und/oder die genannten Vorrichtungen zum Management der Dienstgütevereinbarungen (SM4) von dem genannten Netzwerk-Managementsystem (NMS) über die genannte API-Schnittstelle konfiguriert werden können.

22. Vorrichtung gemäß einem der Ansprüche 19 und 20, **dadurch gekennzeichnet, dass** die genannten Analysevorrichtungen (SM1) und/oder die genannten Alarmvorrichtungen (SM2) und/oder die genannten Vorrichtungen zur Netzwerkbeobachtung (SM3) und/oder die genannten Kontrollvorrichtungen (SM5) und/oder die genannten Vorrichtungen zum Management von Dienstgütevereinbarungen (SM4) von dem genannten Netzwerk-Managementsystem (NMS) über die genannte API-Schnittstelle und über das genannte Management-Informationssystem (MIB) konfiguriert werden können.

23. Vorrichtung gemäß einem der Ansprüche 1 bis 22, **dadurch gekennzeichnet, dass** die genannten Managementvorrichtungen (MAE) von dem genannten Netzwerk-Managementsystem (NMS) über dedizierte Befehle konfiguriert werden können.

24. Vorrichtung gemäß Anspruch 23, **dadurch gekennzeichnet, dass** die genannten Analysevorrichtungen (SM1) und/oder die genannten Alarmvorrichtungen (SM2) und/oder die genannten Vorrichtungen zur Netzwerkbeobachtung (SM3) und/oder die genannten Vorrichtungen zum Management von Dienstgütevereinbarungen (SM4) und/oder die genannten Kontrollvorrichtungen (SM5) entsprechend ausgeführt sind, so dass sie von dem genannten Netzwerk-Managementsystem (NMS) über dedizierte Befehle konfiguriert werden können.

25. Vorrichtung gemäß einem der Ansprüche 23 und 24, **dadurch gekennzeichnet, dass** die genannten Befehle dem Typ « Command Line Interface » entsprechen.

26. Netzwerkgerät (NE) für ein Telekommunikationsnetz (N), das mit einem Netzwerk-Managementsystem (NMS) ausgestattet ist, wobei das genannte Gerät (NE) eine gewählte Konfiguration aufweist und Vorrichtungen (MM) zur Messung der Netzwerkparameter-Werte sowie ein Management-Informationssystem (MIB) umfasst, das Managementdaten speichern kann, die für die genannten Messwerte repräsentativ sind, bestehend aus einer Vorrichtung (D) gemäß einem der vorgenannten Ansprüche.

27. Gerät gemäß Anspruch 26, **dadurch gekennzeichnet, dass** es eine API-Schnittstelle umfasst, sowie dadurch, dass das genannte Management-Informationssystem (MIB) durch das genannte Netzwerk-Managementsystem (NMS) über die genannte API-Schnittstelle konfiguriert werden kann.

28. Gerät gemäß einem der Ansprüche 26 und 27, **dadurch gekennzeichnet, dass** es eine API-Schnittstelle umfasst, sowie dadurch, dass das genannte Management-Informationssystem (MIB) von dem genannten Netzwerk-Managementsystem (NMS) über die genannte API-Schnittstelle programmiert werden kann.

29. Gerät gemäß einem der Ansprüche 26 bis 28, **dadurch gekennzeichnet, dass** es aus einer Gruppe ausgewählt wurde, die zumindest Router, Schalter und Firewalls umfasst.

30. Telekommunikationsnetz (N), das ein Netzwerk-Managementsystem (NMS) umfasst, das eine Vielzahl an Netzwerkgeräten (NE) gemäß einem der Ansprüche 26 bis 29 umfasst.

31. Netz gemäß Anspruch 30, **dadurch gekennzeichnet, dass** jedes Gerät NE) entsprechend ausgeführt ist, um dem genannten Netzwerk-Managementsystem (NMS) Alarmmeldungen und/oder Informationsdaten unterschiedlichen Typs zu liefern.

32. Einsatz einer Vorrichtung gemäß einem der Ansprüche 1 bis 25 in einem Gerät eines Telekommunikationsnetzes, das aus einer Gruppe ausgewählt wird, zu der Übertragungsnetze vom Typ WDM, SONET und SDH, Daten vom Typ Internet-IP und ATM sowie klassische, mobile und NGN-Sprachdaten gehören.

## Claims

1. Local assurance management device (D) embedded in a network equipment (NE) of a communication network (N) equipped with a network management system (NMS), said network equipment (NE) having a selected configuration and including measuring means (MM) for measuring values of one or more parameters of the network and a management information base (MIB) for storing management data representative of said measured values, which device is **characterized in that** it comprises management means (MAE) adapted to adapt the configuration of said network equipment (NE) as a function of at least said management data stored in said management information base (MIB) and selected assurance rules defining a local assurance policy, said adaptation consisting in modification of a policy on measuring parameters and/or a policy on reporting to said network management system (NMS).

2. Device according to claim 1, **characterized in that** said management means (MAE) are adapted to adapt said configuration as a function of information data received from at least one other network equipment (NE).

3. Device according to either claim 1 or claim 2, **characterized in that** said adaptation consists in a modification of its mode of operation.

4. Device according to any one of claims 1 to 3, **characterized in that** said management means (MAE) comprise analysis means (SM1) adapted to determine, as a function of some of said selected assurance rules, information data representative of the temporal evolution, over a selected time period, of the value(s) of one or more network parameters stored in said management information base (MIB).

5. Device according to claim 4, **characterized in that** said analysis means (SM1) are adapted to deliver information data representative of a trend analysis and/or of an analysis of profiles or signatures and/or of a discontinuity analysis and/or of an aggregation of values of parameters of the network.

6. Device according to either claim 4 or claim 5, **characterized in that** said analysis means (SM1) are configurable.

7. Device according to claim 6, **characterized in that** said analysis means (SM1) are adapted to use new computations relating to network parameters received from said network management system (NMS).

8. Device according to any one of claims 1 to 7, **characterized in that** said management means (MAE) comprise alarm means (SM2) adapted to trigger the sending of an alarm and/or of information data to said network management system (NMS) and/or to at least one other network equipment (NE) as a function of certain of said selected assurance rules.

9. Device according to claim 8, **characterized in that** said alarm means (SM2) are configurable.

10. Device according to either claim 8 or claim 9, **characterized in that** said information data and said alarms are representative of a result of an analysis effected by said analysis means (SM1) and/or of an aggregation of data effected by said analysis means (SM1) and/or a value of a network parameter stored in said management information base (MIB).

11. Device according to any one of claims 1 to 10, **characterized in that** said management means (MAE) comprise means for observing the network (SM3) defining an "end-to-end" type stream measurement agent and adapted to determine information data representative of said end-to-end type stream as a function of certain of said selected assurance rules.

12. Device according to claim 11, **characterized in that** said means (SM3) for observing the network are configurable.

13. Device according to any one of claims 1 to 12, **characterized in that** said management means (MAE) comprise means for managing service level agreements (SM4) adapted to determine information data representative of said agreement management as a function of certain of said selected assurance rules.

14. Device according to claim 13, **characterized in that** said service level agreement management means (SM4) are configurable.

15. Device according to any one of claims 2 to 14, **characterized in that** said management means (MAE) comprise monitoring means (SM5) adapted to manage the functioning of said analysis means (SM1), said alarm means (SM2), said network observation means (SM3) and said service level agreement management means (SM4) as a function of at least certain of said selected assurance rules.

16. Device according to claim 15, **characterized in that** said monitoring means (SM5) are supplied with information data by said analysis means (SM1) and/or said network observation means (SM3) and/or said service level agreement management means (SM4) and are adapted to instruct said alarm means (SM2) to generate alarms and/or reports in the event of detection of failure to respect an assurance rule by received information data.

17. Device according to either claim 15 or claim 16, **characterized in that** said monitoring means (SM5) are adapted to form a rule engine storing said selected assurance rules.

18. Device according to any one of claims 15 to 17, **characterized in that** said monitoring means (SM5) are configurable.

19. Device according to any one of claims 1 to 18, **characterized in that** said management means (MAE) are adapted to be configured by said network management system (NMS) via an application programming interface (API) of said network equipment (NE).

20. Device according to any one of claims 1 to 19, **characterized in that** said management means (MAE) are adapted to be configured by said network management system (NMS) via an application programming interface (API) of said network equipment (NE) and via said management information base (MIB).

21. Device according to either claim 19 or claim 20, **characterized in that** said analysis means (SM1) and/or said alarm means (SM2) and/or said network observation means (SM3) and/or said monitoring means (SM5) and/or said service level agreement management means (SM4) are adapted to be configured by said network management system (NMS) via said application programming interface (API).

22. Device according to either claim 19 or claim 20, **characterized in that** said analysis means (SM1) and/or said alarm means (SM2) and/or said network observation means (SM3) and/or said monitoring means (SM5) and/or said service level agreement management means (SM4) are adapted to be configured by said network management system (NMS) via said application programming interface (API) and via said management information base (MIB).

23. Device according to any one of claims 1 to 22, **characterized in that** said management means (MAE) are adapted to be configured by said network management system (NMS) by means of dedicated commands.

24. Device according to claim 23, **characterized in that** said analysis means (SM1) and/or said alarm means (SM2) and/or said network observation means (SM3) and/or said service level agreement management means (SM4) and/or said monitoring means (SM5) are adapted to be configured by said network management system (NMS) by means of dedicated commands.

25. Device according to either claim 23 or claim 24, **characterized in that** said commands are of "command line interface" type.

26. Network equipment (NE) for a communication network (N) equipped with a network management system (NMS), said network equipment (NE) having a selected configuration and including measuring means (MM) for measuring values of one or more parameters of the network and a management information base (MIB) for storing management data representative of said measured values, said network equipment comprising a device (D) according to any one of the preceding claims.

27. Network equipment according to claim 26, **characterized in that** it comprises an application programming interface (API) and said management information base (MIB) is adapted to be configured by said network management system (NMS) via said application programming interface (API).

28. Network equipment according to either claim 26 or claim 27, **characterized in that** it comprises an application programming interface (API) and said management information base (MIB) is adapted to be programmed by said network management system (NMS) via said application programming interface (API).

29. Network equipment according to any one of claims 26 to 28, **characterized in that** it is selected from a group comprising at least routers, switches and firewalls.

30. Communication network (N) including a network management system (NMS) comprising a multiplicity of network equipments (NE) according to any one of claims 26 to 29.

31. Communication network according to claim 30, **characterized in that** each network equipment (NE) is adapted to deliver alarms and/or information data of different types to said network management system (NMS).

32. Use of a device according to any one of claims 1 to 25 in an equipment of a communication network selected from a group comprising transmission networks of WDM, SONET and SDH type, data networks of Internet protocol (IP) and ATM type, and conventional, mobile and NGN type voice networks.
